# FASCICULE DE BREVET EUROPEEN

(11) **EP 2 330 695 B1**
(45) Date de publication et mention de la délivrance du brevet: **02.04.2014**
(21) Numéro de dépôt: 10191346.5
(22) Date de dépôt: 16.11.2010
(51) Int. Cl.: H01R 39/02

(54) **Collecteur de machine électrique tournante**
Kollektor für umlaufende elektrische Maschine
Collector of an electric rotating machine

(30) Priorité: 25.11.2009 FR 0958355
(43) Date de publication de la demande: 08.06.2011
(73) Titulaire: Valeo Equipements Electriques Moteur, 94046 Créteil Cedex (FR)
(72) Inventeur: Dubus, Jean-Marc, 77380 Combs La Ville (FR); Tellier, Richard, 94100 Saint Maur Des Fosses (FR); El Baraka, Khadija, 77600 Bussy St Georges (FR); Maquinghen, Eric, 62170 Bernieulles (FR); Ribot, Hervé, 62250 Saint Inglevert (FR); Chen, Jiaqi, 92350 Le Plessis Robinson (FR)

(56) Documents cités:
- WO-A2-2004/038905
- DE-A1- 10 328 508
- FR-A1- 2 928 043
- FR-A1- 2 928 044

## Description

La présente invention concerne des collecteurs surmoulés pour machines électriques tournantes, telles qu'alternateurs ou alterno-démarreurs, notamment de véhicule automobile.

On connaît classiquement des collecteurs qui sont destinés à être emmanchés à force sur un arbre d'alternateur et qui sont réalisés par un surmoulage de matière isolante sur des languettes formées dans des matériaux électriquement conducteurs. Un collecteur de ce type est décrit par exemple dans la demande de brevet français FR-2928044.

On a représenté aux Figs.1 à 3 ci-annexées un collecteur du type décrit dans FR-2928044. Les Figs.1 et 2 montrent le collecteur à un stade fini de sa fabrication. La Fig.3 est une vue éclatée, en perspective, montrant les différentes pièces formant le collecteur.

Ce collecteur de la technique antérieure, repéré CO, comporte deux languettes électriquement conductrices 1a, 1b, deux bagues cylindriques électriquement conductrices 2a et 2b, un insert 3 et un surmoulage 4.

Les languettes 1a et 1 b sont généralement des languettes plates en cuivre. Elles s'étendent à partir d'une partie annulaire 4a formant une extrémité du surmoulage 4 jusqu'aux bagues 2a, 2b, en étant sensiblement parallèles à l'axe commun à la partie annulaire 4a et aux bagues 2a, 2b.

La languette 1a est plus courte que la languette 1 b. La languette 1a est en contact électriquement conducteur avec la bague 2a, au niveau de la moitié de cette bague 2a. La bague 2a, des deux bagues 2a, 2b, est celle qui est la moins éloignée de la partie annulaire 4a. La languette 1b est quant à elle en contact électriquement conducteur avec la bague 2b, au niveau de la moitié de cette bague 2b qui est la plus éloignée de la partie annulaire 4a. Dans le processus de fabrication, une opération de soudure est de préférence prévue de manière à lier entre elles les pièces 1a, 2a et 1 b, 2b, et de garantir ainsi une meilleure continuité électrique.

L'insert 3 et le surmoulage 4 sont généralement réalisés avec des matériaux plastiques différents. En effet, le matériau plastique de l'insert 3 doit avoir une température de fusion sensiblement supérieure à celle du surmoulage 4. Cela est nécessaire pour conserver à l'insert 3 sa forme d'origine lors de l'opération de surmoulage, lorsque le matériau de l'insert 3 est en contact avec le matériau du surmoulage 4. Ainsi, il est connu de réaliser l'insert 3 et le surmoulage 4 avec des résines thermoplastiques. Des polymères hautes performances tels que le PolyPhtalAmide (PPA) et le PolyPhénylèneSulfide (PPS) sont utilisés pour l'insert 3 et le surmoulage 4, respectivement.

L'insert 3 permet d'assurer un positionnement correct des languettes 1a et 1b lors de la réalisation du surmoulage 4, de façon à éviter qu'une portion de la languette 1a ou de la languette 1 b qui n'aurait pas été correctement surmoulée se trouve à nu à l'intérieur du collecteur ou à l'extérieur de celui-ci, alors qu'elle n'aurait pas du l'être, créant ainsi des risques de mise à la masse par contact avec l'arbre de l'alternateur ou des courts-circuits entre les bagues 2a, 2b.

L'insert 3 a également pour fonction d'assurer un écartement minimum entre la languette 1b et la bague 2a, ces éléments étant à proximité sur toute une longueur axiale de la bague 2a. Cet écartement minimum permet de garantir une résistance déterminée au claquage électrique à cet endroit plus particulièrement exposé du collecteur.

Malgré toute l'attention apportée au bon positionnement des pièces lors des opérations de fabrication du collecteur décrit ci-dessus, il a été constaté qu'un claquage électrique peut encore se produire dans le collecteur lors de la fabrication d'un alternateur et conduire à un court-circuit dans ledit collecteur.

Plus particulièrement, ce claquage électrique identifié par l'entité inventive se produit lors d'une étape de durcissement d'un vernis d'imprégnation appliqué au rotor de l'alternateur. Le durcissement du vernis est obtenu par chauffage. Pour obtenir ce chauffage, il est fait circuler un courant électrique dans la bobine d'excitation du rotor afin de provoquer, par effet Joule, une élévation de la température du rotor. Cette élévation de la température accélère le durcissement du vernis dans le rotor.

Deux méthodes sont habituellement utilisées pour faire circuler un courant électrique de durcissement de vernis dans la bobine d'excitation du rotor.

La première méthode consiste à relier les extrémités de la bobine d'excitation du rotor (en court-circuitant les bagues 2a, 2b du collecteur) et à placer le rotor dans un inducteur qui génère la circulation d'un courant d'induction dans la bobine.

La deuxième méthode consiste à appliquer une tension entre les bagues 2a et 2b, auxquelles sont reliées les extrémités de la bobine d'excitation, de façon à faire circuler un courant électrique de durcissement de vernis dans la bobine d'excitation.

Le claquage électrique indiqué ci-dessus, qui se produit dans le collecteur, intervient à l'interruption du courant électrique de durcissement de vernis dans la bobine d'excitation du rotor. Ce claquage est dû à une surtension apparaissant alors dans la bobine d'excitation.

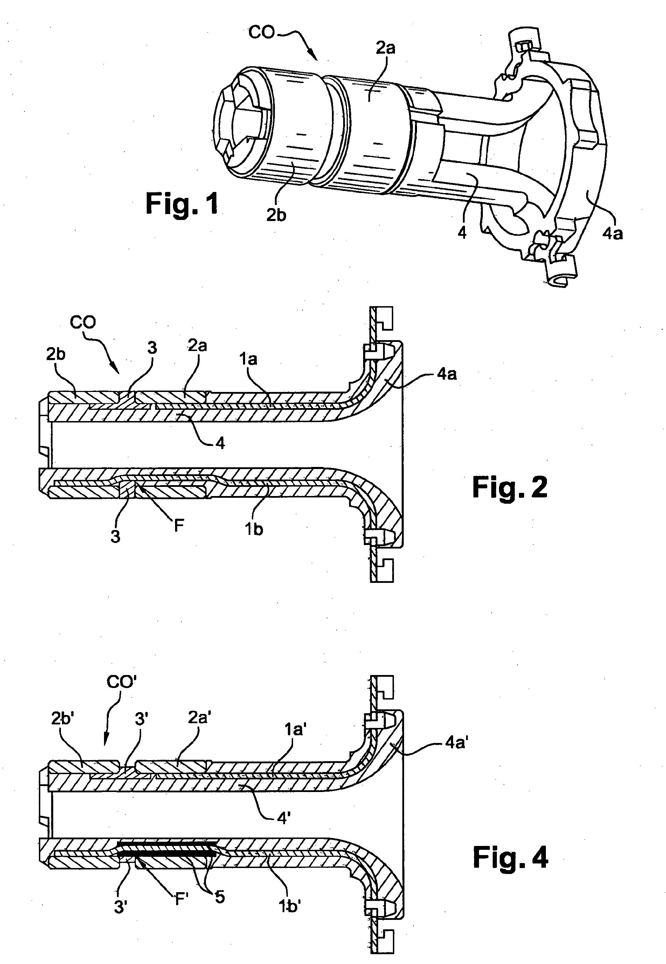

La flèche F montrée à la Fig.2 montre la zone où apparaît ce claquage électrique, et le court-circuit consécutif, dans ce collecteur selon la technique antérieure.

La présente invention a pour objet d'apporter une solution au problème indiqué ci-dessus de claquage électrique intervenant pendant l'étape de durcissement du vernis d'imprégnation appliqué au rotor de l'alternateur.

Le collecteur de machine électrique tournante pour véhicule automobile comprend des première et seconde bagues de conduction électrique ayant chacune une partie annulaire interne, des premier et second éléments conducteurs ayant chacun une extrémité en contact électrique avec une dite partie annulaire interne respective, au moins une pièce en un premier matériau plastique isolant remplissant une fonction de prévention contre un claquage électrique dans le collecteur et un surmoulage en un second matériau plastique isolant recouvrant en partie les bagues, éléments conducteurs et pièce et ayant une partie annulaire à laquelle sont fixées des première et seconde cosses de raccordement électrique respectives des premier et second éléments conducteurs.

Conformément à l'invention, la pièce faite dans le premier matériau plastique isolant est formée en un matériau conservant sa caractéristique diélectrique au moins jusqu'à une température supérieure à une température de durcissement d'un vernis d'imprégnation appliqué à un rotor de la machine électrique sur lequel est destiné à être monté le collecteur.

Selon une forme de réalisation particulière, la pièce faite dans le premier matériau plastique isolant comporte un insert interposé entre les bagues et garantissant un positionnement déterminé des bagues et des éléments conducteurs.

Selon une autre forme de réalisation particulière, la pièce faite dans le premier matériau plastique isolant comporte également un pré-surmoulage, en forme de gaine, qui est réalisé sur une portion d'un élément conducteur en regard d'une partie annulaire interne d'une des bagues de conduction électrique.

Selon une caractéristique particulière, l'insert indiqué ci-dessus est réalisé avec un matériau polymère PolyEtherEtherKetone (PEEK).

Selon une autre caractéristique particulière, l'insert indiqué ci-dessus est réalisé avec un matériau polymère PolyAmide-Imide (PAI).

Selon une autre caractéristique particulière, l'insert indiqué ci-dessus est réalisé avec un composite thermodur du type dit « BMC » pour « Bulk Moulding Compound » en anglais.

Selon une autre caractéristique particulière, le pré-surmoulage indiqué ci-dessus est réalisé avec un matériau polymère PolyEtherEtherKetone (PEEK).

Selon une autre caractéristique particulière, le pré-surmoulage indiqué ci-dessus est réalisé avec un matériau polymère PolyAmide-Imide (PAI).

Selon une autre caractéristique particulière, le pré-surmoulage indiqué ci-dessus est réalisé avec un composite thermodur du type dit « BMC » pour « Bulk Moulding Compound » en anglais.

Selon une autre caractéristique particulière, le surmoulage indiqué ci-dessus est réalisé avec un matériau polymère PolyPhénylèneSulfide (PPS).

D'autres caractéristiques et avantages de l'invention apparaîtront à la lecture de la description suivante de plusieurs formes de réalisation du collecteur selon l'invention, cette description étant purement illustrative et non limitative et devant être lue en regard des dessins annexés, dans lesquels :

La Fig.1, déjà analysée, représente schématiquement une vue en coupe d'une première forme de réalisation d'un collecteur surmoulé pour alternateur ou alterno-démarreur;

La Fig.2, déjà analysée, représente schématiquement une vue en coupe axiale du collecteur de la Fig.1;

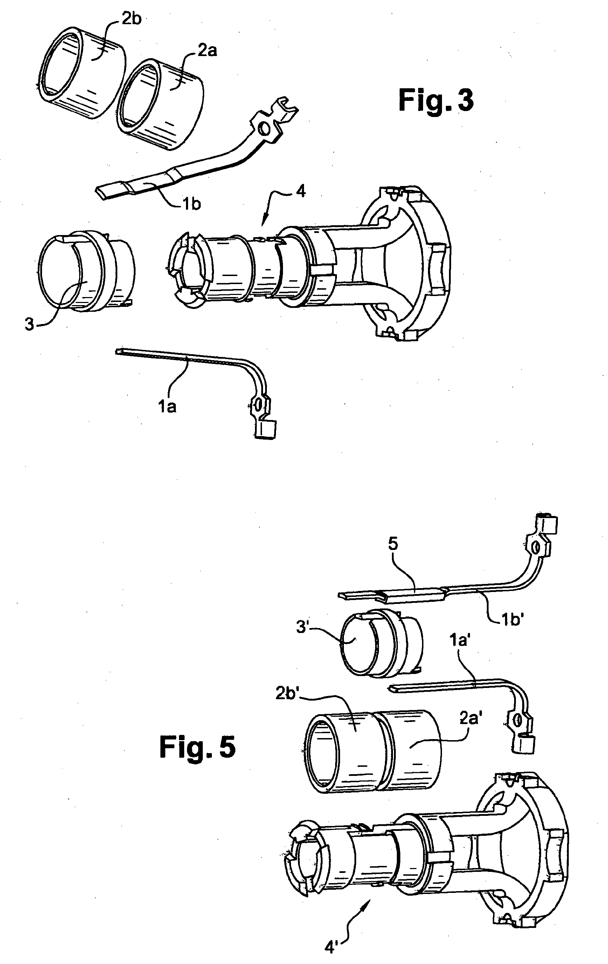

La Fig.3, déjà analysée, est une vue éclatée montrant schématiquement en perspective différentes pièces formant le collecteur de la Fig.1;

La Fig.4 représente schématiquement une vue en coupe axiale d'une seconde forme de réalisation d'un collecteur surmoulé pour alternateur ou alterno-démarreur; et

La Fig. 6 est une vue éclatée montrant schématiquement en perspective différentes pièces formant le collecteur de la Fig.4.

Concernant la forme de réalisation du collecteur selon les Figs.1 à 3, il est connu dans la technique antérieure de réaliser l'insert 3 en polymère PPA et le surmoulage 4 en polymère PPS.

Les essais effectués par l'entité inventive sur ce collecteur de la technique antérieure ont mis en évidence le fait que le claquage électrique constaté pendant la phase de durcissement du vernis d'imprégnation provient d'une dégradation en température de la caractéristique diélectrique de l'insert 3 en PPA lors cette phase de durcissement pendant laquelle la température est de l'ordre de 150 à 200°C.

Pour cette première forme de réalisation de collecteur, conformément à la présente invention, il doit être choisi pour l'insert 3 un matériau qui garde sa caractéristique diélectrique au moins jusqu'à une température supérieure à une température de durcissement de vernis d'imprégnation appliquée au rotor de la machine électrique sur lequel est destiné à être monté le collecteur.

Le polymère PEEK (PolyEtherEtherKetone) a été sélectionné par l'entité inventive pour satisfaire au critère ci-dessus de tenue en température de la caractéristique diélectrique pendant la phase de durcissement de vernis d'imprégnation.

Par ailleurs, la température de fusion du polymère PEEK, voisine de 370°C, est bien supérieure à la température de fusion, voisine de 300°C, du polymère PPS utilisé pour le surmoulage 4. Cela prévient tout risque de fluage et de perte d'épaisseur de l'insert 3 pendant le surmoulage de la pièce 4, fluage et perte d'épaisseur qui autrement pourraient dégrader les caractéristiques d'isolation électrique du collecteur.

On notera ici que des matériaux autres que le polymère thermoplastique PEEK pourront être choisis pour la réalisation de l'insert 3 d'un collecteur selon l'invention. Le choix du polymère PEEK pour l'insert 3 dans la forme de réalisation ci-dessus du collecteur de l'invention est ici adapté au choix du polymère PPS pour le surmoulage 4.

Ainsi, par exemple, il sera possible d'utiliser également le polymère PAI (PolyAmide-Imide), commercialisé sous la marque déposée «Torlon», qui présente les caractéristiques d'isolation électrique et de tenue en température voulues. Cependant, le matériau choisi pour le surmoulage 4 devra avoir une température de fusion et de moulage par injection qui devra rester sensiblement inférieure à la température de fusion du PAI voisine de 270°C.

Comme autres exemples, les composites thermodurs du type BMC (pour « Bulk Molding Compound » en anglais) présentent aussi les caractéristiques d'isolation électrique et de tenue en température voulues et leur utilisation est également possible pour l'insert 3 du collecteur selon l'invention.

En référence également aux Figs.4 et 5, il est maintenant décrit une seconde forme de réalisation CO' d'un collecteur surmoulé selon l'invention.

Les éléments du collecteur CO' qui sont analogues aux éléments du collecteur CO déjà décrits gardent les mêmes repères qui sont complétés par un prime.

Le collecteur CO' diffère du collecteur CO essentiellement par un pré-surmoulage 5, en forme de gaine, qui est réalisé sur une portion de la languette 1 b' et cela avant la réalisation du surmoulage 4. Ce pré-surmoulage 5 est formé d'un matériau diélectrique isolant qui recouvre la portion de la languette 1b', à proximité de la bague 2a'. C'est au niveau de cette portion que sont susceptibles d'apparaître des problèmes de court-circuit ou de mise à la masse.

Comme cela apparaît à la Fig.4, le pré-surmoulage 5 recouvre la languette 1 b' sur une portion de longueur légèrement supérieure à la longueur de la bague 2a'. Un recouvrement isolant de la languette 1 b' est assuré également sur une courte longueur supplémentaire de part et d'autre de la bague 2a'.

Dans cette forme de réalisation, le matériau utilisé pour le pré-surmoulage 5 est le polymère PEEK (PolyEtherEtherKetone) qui a été sélectionné par l'entité inventive pour les mêmes raisons que pour l'insert 3 de la première forme de réalisation des Figs.1 à 3, à savoir pour la tenue en température de sa caractéristique diélectrique pendant la phase de durcissement du vernis d'imprégnation. Les matériaux utilisés dans cette forme de réalisation de l'invention pour l'insert 3' et le surmoulage 4' sont respectivement le PPA et le PPS.

Dans cette forme de réalisation, c'est au pré-surmoulage 5 qu'est dévolu le rôle de prévenir tout claquage électrique au niveau de la partie identifiée par la flèche F' à la Fig.4. En variante, l'insert 3' peut être réalisé avec le même matériau que le pré-surmoulage 5, à savoir, le PEEK dans cette forme de réalisation. Dans ce dernier cas, le pré-surmoulage 5 et l'insert 3' participent conjointement à prévenir le claquage électrique.

De même qu'indiqué ci-dessus pour l'insert 3, des matériaux autres que le polymère thermoplastique PEEK pourront être choisis pour la réalisation du pré-surmoulage 5 et de l'insert 3'. Le choix du polymère PEEK dans la forme de réalisation ci-dessus du collecteur de l'invention est ici adapté au choix du polymère PPS pour le surmoulage 4'. De même que pour l'insert 3, le polymère PAI ou des composites thermodurs du type BMC (pour « Bulk Molding Compound » en anglais) pourront être utilisés pour le pré-surmoulage 5 et l'insert 3' dans certaines formes de réalisation du collecteur selon l'invention.

## Revendications

1. Collecteur de machine électrique tournante pour véhicule automobile, comprenant des première et seconde bagues de conduction électrique (2a, 2b; 2a', 2b') ayant chacune une partie annulaire interne, des premier et second éléments conducteurs (1a, 1b ; 1a', 1b') ayant chacun une extrémité en contact électrique avec une dite partie annulaire interne respective, au moins une pièce (3; 3', 5) en un premier matériau plastique isolant remplissant une fonction de prévention contre un claquage électrique dans ledit collecteur (CO ; CO') et un surmoulage (4 ; 4') en un second matériau plastique isolant recouvrant en partie lesdits bagues (2a, 2b; 2a', 2b'), éléments conducteurs (1a, 1b ; 1a', 1 b') et pièce (3; 3', 5) et ayant une partie annulaire (4a; 4a') à laquelle sont fixées des première et seconde cosses de raccordement électrique respectives desdits premier et second éléments conducteurs (1a, 1b ; 1a', 1b'), **caractérisé en ce que** ledit premier matériau plastique isolant est un matériau conservant sa caractéristique diélectrique au moins jusqu'à une température supérieure à une température de durcissement d'un vernis d'imprégnation appliqué à un rotor de la machine électrique sur lequel est destiné à être monté le collecteur (CO; CO').

2. Collecteur selon la revendication 1, **caractérisé en ce que** ladite pièce comporte un insert (3; 3') interposé entre lesdites bagues (2a, 2b; 2a', 2b') et garantissant un positionnement déterminé desdites bagues (2a, 2b; 2a', 2b') et desdits éléments conducteurs (1a, 1b; 1a', 1b').

3. Collecteur selon la revendication 1 ou 2, **caractérisé en ce que** ladite pièce comporte également un pré-surmoulage (5), en forme de gaine, qui est réalisé sur une portion d'un élément conducteur (1b') en regard d'une partie annulaire interne d'une dite bague de conduction électrique (2a').

4. Collecteur selon la revendication 2, **caractérisé en ce que** ledit insert (3; 3') est réalisé avec un matériau polymère PolyEtherEtherKetone (PEEK).

5. Collecteur selon la revendication 2, **caractérisé en ce que** ledit insert (3; 3') est réalisé avec un matériau polymère PolyAmide-Imide (PAI).

6. Collecteur selon la revendication 2, **caractérisé en ce que** ledit insert (3; 3') est réalisé avec un composite thermodur du type dit « BMC » pour « Bulk Moulding Compound » en anglais.

7. Collecteur selon la revendication 3, **caractérisé en ce que** ledit pré-surmoulage (5) est réalisé avec un matériau polymère PolyEtherEtherKetone (PEEK).

8. Collecteur selon la revendication 3, **caractérisé en ce que** ledit pré-surmoulage (5) est réalisé avec un matériau polymère PolyAmide-Imide (PAI).

9. Collecteur selon la revendication 3, **caractérisé en ce que** ledit pré-surmoulage (5) est réalisé avec un composite thermodur du type dit « BMC » pour « Bulk Moulding Compound » en anglais.

10. Collecteur selon la revendication 1, 4 ou 7, **caractérisé en ce que** ledit surmoulage (4; 4') est réalisé avec un matériau polymère PolyPhénylèneSulfide (PPS).

## Patentansprüche

1. Kollektor einer rotierenden elektrischen Maschine für Kraftfahrzeuge, der einen ersten und einen zweiten elektrisch leitenden Ring (2a, 2b; 2a', 2b'), wovon jeder einen inneren ringförmigen Teil besitzt, erste und zweite Leiterelemente (1a, 1b; 1a', 1b'), wovon jedes ein Ende in elektrischem Kontakt mit einem entsprechenden der inneren ringförmigen Teile, wenigstens ein Teil (3; 3', 5) aus einem ersten isolierenden Kunststoff, der eine Funktion des Verhinderns eines elektrischen Durchschlags in dem Kollektor (CO; CO') erfüllt, und einen Überguss (4; 4') aus einem zweiten isolierenden Kunststoff, der die Ringe (2a, 2b; 2a', 2b'), die Leiterelemente (1a, 1b; 1a', 1b') und das Teil (3; 3', 5) abdeckt und einen ringförmigen Teil (4a; 4a') besitzt, an dem erste und zweite elektrische Anschlusshülsen für das erste bzw. das zweite Leiterelement (1a, 1b; 1a', 1b') befestigt sind, umfasst, **dadurch gekennzeichnet, dass** der erste isolierende Kunststoff ein Material ist, das seine dielektrische Eigenschaft wenigstens bis zu einer Temperatur oberhalb einer Härtungstemperatur eines Imprägnierungslacks, der auf einen Rotor der elektrischen Maschine aufgebracht ist, an dem der Kollektor (CO; CO') montiert werden soll, beibehält.

2. Kollektor nach Anspruch 1, **dadurch gekennzeichnet, dass** das Teil einen Einsatz (3; 3') umfasst, der zwischen die Ringe (2a, 2b; 2a', 2b') eingefügt ist und eine bestimmte Positionierung der Ringe (2a, 2b; 2a', 2b') und der Leiterelemente (1a, 1b; 1a', 1b') gewährleistet.

3. Kollektor nach Anspruch 1 oder 2, **dadurch gekennzeichnet, dass** das Teil außerdem einen Vor-Überguss (5) in Mantelform aufweist, der auf einem Abschnitt eines Leiterelements (1b') gegenüber einem inneren ringförmigen Teil eines der elektrisch leitenden Ringe (2a') verwirklicht ist.

4. Kollektor nach Anspruch 2, **dadurch gekennzeichnet, dass** der Einsatz (3; 3') aus einem Polyether-Etherketon-Polymermaterial (PEEK) verwirklicht ist.

5. Kollektor nach Anspruch 2, **dadurch gekennzeichnet, dass** der Einsatz (3; 3') aus einem Polyamid-Imid-Polymermaterial (PAI) verwirklicht ist.

6. Kollektor nach Anspruch 2, **dadurch gekennzeichnet, dass** der Einsatz (3; 3') aus einem wärmegehärteten Verbundstoff des so genannten "BMC"-Typs (für "Bulk Moulding Compound" im Englischen) verwirklicht ist.

7. Kollektor nach Anspruch 3, **dadurch gekennzeichnet, dass** der Vor-Überguss (5) aus einem Polyether-Etherketon-Polymermaterial (PEEK) verwirklicht ist.

8. Kollektor nach Anspruch 3, **dadurch gekennzeichnet, dass** der Vor-Überguss (5) aus einem Polyamid-Imid-Polymermaterial (PAI) verwirklicht ist.

9. Kollektor nach Anspruch 3, **dadurch gekennzeichnet, dass** der Vor-Überguss (5) aus einem wärmehärtenden Verbund des so genannten "BMC"-Typs (für "Bulk Moulding Compound" im Englischen) verwirklicht ist.

10. Kollektor nach Anspruch 1, 4 oder 7, **dadurch gekennzeichnet, dass** der Überguss (4; 4') aus einem Polyphenylen-Sulfid-Polymermaterial (PPS) verwirklicht ist.

## Claims

1. Collector of a rotating electrical machine for a motor vehicle, comprising first and second electrical conduction rings (2a, 2b; 2a', 2b') each having an inner annual part, first and second conductive elements (1a, 2b; 1a', 1b') each having an end in electrical contact with one respective said inner annular part, at least one part (3; 3', 5) made of a first insulating plastic material fulfilling a prevention function against an electrical flashover in said collector (CO; CO') and an overmoulding (4; 4') made of a second insulating plastic material partly covering said rings (2a, 2b; 2a', 2b'), conductive elements (1a, 2b; 1a', 1b') and part (3; 3', 5) and having an annular part (4a; 4a') to which are fastened first and second respective electrical connection terminals of said first and second conductive elements (1a, 1b; 1a', 1b'), **characterized in that** said first insulating plastic material is a material that retains its dielectric characteristic at least up to a temperature greater than a curing temperature of an impregnating lacquer applied to a rotor of the electrical machine on which the collector (CO; CO') is intended to be mounted.

2. Collector according to Claim 1, **characterized in that** said part comprises an insert (3; 3') interposed between said rings (2a, 2b; 2a', 2b') and ensuring a determined positioning of said rings (2a, 2b; 2a', 2b') and of said conductive elements (1a, 1b; 1a', 1b').

3. Collector according to Claim 1 or 2, **characterized in that** said part also comprises a pre-overmoulding (5), in the form of a sheath, which is produced over a portion of a conductive element (1b') facing an inner annular part of one said electrical conduction ring (2a').

4. Collector according to Claim 2, **characterized in that** said insert (3; 3') is produced with a PolyEtherEtherKetone (PEEK) polymer material.

5. Collector according to Claim 2, **characterized in that** said insert (3; 3') is produced with a PolyAmideImide (PAI) polymer material.

6. Collector according to Claim 2, **characterized in that** said insert (3; 3') is produced with a thermoset compound of the "BMC" "Bulk Moulding Compound" type.

7. Collector according to Claim 3, **characterized in that** said pre-overmoulding (5) is produced with a PolyEtherEtherKetone (PEEK) polymer material.

8. Collector according to Claim 3, **characterized in that** said pre-overmoulding (5) is produced with a PolyAmide-Imide (PAI) polymer material.

9. Collector according to Claim 3, **characterized in that** said pre-overmoulding (5) is produced with a thermoset compound of the "BMC" "Bulk Moulding Compound" type.

10. Collector according to Claim 1, 4 or 7, **characterized in that** said overmoulding (4; 4') is produced with a PolyPhenyleneSulfide (PPS) polymer material.
